Europäisches Patentamt

European Patent Office

Office européen des brevets

(19)

(11) **EP 0 796 885 A2**

(12) # EUROPEAN PATENT APPLICATION

(43) Date of publication:
**24.09.1997 Bulletin 1997/39**

(51) Int Cl.[6]: **C08J 5/18**, C08F 8/32,
A22C 13/00

(21) Application number: **97301939.1**

(22) Date of filing: **21.03.1997**

(84) Designated Contracting States:
**DE DK FR GB NL**

(30) Priority: **22.03.1996 JP 93498/96**
**10.02.1997 JP 41612/97**

(71) Applicant: **Kureha Chemical Industry Co., Ltd.**
**Tokyo 103 (JP)**

(72) Inventors:
• **Hosoda, Tomonori,**
**c/o Polymer Proc. Tech. Cent.**
**Tamari-Mura, Niihari-Gun, Ibaraki-Ken (JP)**
• **Ogino, Yasushi, c/o Polymer Proc. Tech. Cent.**
**Tamari-Mura, Niihari-Gun, Ibaraki-Ken (JP)**
• **Uehara, Tsutomu, c/o Polymer Proc. Tech. Cent.**
**Tamari-Mura, Niihari-Gun, Ibaraki-Ken (JP)**

(74) Representative: **Woods, Geoffrey Corlett et al**
**J.A. KEMP & CO.**
**14 South Square**
**Gray's Inn**
**London WC1R 5LX (GB)**

Remarks:
A request for correction of page 3 of the description, as originally filed, has been filed pursuant to Rule 88 EPC. A decision on the request will be taken during the proceedings before the Examining Division (Guidelines for Examination in the EPO, A-V, 3.).

(54) **Molded products having selective gas permeability, films thereof, and methods for their manufacture**

(57)     A molded product having selective gas permeability which comprises a reaction product obtainable by reacting a polyacrylic acid and an aliphatic diamine, the molar ratio of said diamine with respect to the entirety of the carboxyl groups in said polyacrylic acid being from 0.2:1 and 2.0:1; wherein:

(a) the absorbance ratio of N-H stretching vibration attributed to an amine salt having a maximum absorption wave number of from 1,800 to 2,500 cm$^{-1}$ to C-H deformation vibration attributed to a methylene group having a maximum absorption wave number of from 1,430 to 1,480 cm$^{-1}$ (N$^{+}$-H/CH) is from 0.001:1 to 0.11:1; or

(b) the amount of elution of the molded product upon being soaked in 80°C water for 1 hour is less than 50 weight% based on the original weight of the molded product.

## Description

The present invention relates to a molded product, particularly in the form of film, having selective gas permeability which is formed from a reaction product of specified starting materials, as well as to a method of manufacturing such a molded product. More particularly, the invention relates to a molded product, e.g., a film, which is formed from a reaction product of a polyacrylic acid and an aliphatic diamine, and which has resistance to cold water and hot water (i.e., is only slightly soluble therein) as well as to a method of manufacturing such a molded product. The film of the present invention having selective gas permeability and obtained through a heat treatment under specific conditions is characterized by its high ratio of carbon dioxide gas permeation rate to oxygen gas permeation rate ($CO_2$ gas permeation rate/$O_2$ gas permeation rate), and also by its resistance to cold water and hot water.

Techniques related to effective separation of carbon dioxide gas and materials for the separation are associated with techniques for separating the carbon dioxide gas present in an abundant volume of a gas, as is the case with separation of carbon dioxide gas from combustion exhaust gases generated from thermal power plants, or separation of carbon dioxide gas from natural gases. There has conventionally been a great need for a separator material which has excellent separation efficiency and which exhibits remarkable resistance, particularly resistance to hot water, in the environment in which it is used.

Absorption methods have long been known, as methods for separating carbon dioxide gas. According to one example of such absorption methods, carbon dioxide gas is bound to or released from a variety of amines, making use of a reversible reaction between an amine and carbon dioxide gas.

Journal of Membrane Science, 6 (1980), pages 339-343 discloses a membrane having highly selective permeability to carbon dioxide gas. According to the technique disclosed in that publication, polystyrene is grafted to a backbone polymer of polyethylene tetrafluoride so as to introduce a sulfon group, to thereby obtain a cation exchange membrane, and monovalently cationized ethylenediamine serving as a $CO_2$ carrier is carried on the membrane. The resultant membrane has a high ratio of carbon dioxide gas permeation rate to oxygen gas permeation rate.

The "Collection of Lecture Summaries" of the Fifth Membrane Symposium held in Kyoto in 1993 discloses, from page 73 to page 75, that a membrane material is obtained by radical copolymerization through use of acrylonitrile and 2-ethylhexyl methacrylate as comonomers and, as an immobilized carrier, 2-(N,N-dimethylamino)ethyl methacrylate having a tertiary amine, and demonstrates, on the basis of a comparison among the oxygen gas permeation rate, nitrogen gas permeation rate, and carbon dioxide gas permeation rate of the membrane material, that the resultant polymer membrane selectively permits permeation of carbon dioxide gas therethrough.

The "Collection of Lecture Summaries" of the 58th Chemical Engineering Conference, Vol. 1, No. 1 discloses, on page 269, that a membrane prepared by soaking in an aqueous ethylenediamine solution an ion exchange membrane obtained through plasma grafting of acrylic acid to a polyethylene porous membrane so as to introduce monocationic ethylenediamine into the membrane selectively permits permeation of carbon dioxide gas.

However, not all the separator membranes disclosed in those publications are free from disadvantages in terms of cost and ease of manufacture. In addition, some of those membranes have the problem of poor resistance (hot water resistance) when used in an environment of high temperature (50°C, for example) and high humidity, as is the case of separating carbon dioxide gas from combustion exhaust gases in thermal power plants. Therefore, improvement of conventional membranes is desired.

In the field of food packaging techniques, development of film for selectively separating carbon dioxide gas has been actively progressed. For example, Japanese Patent Application Laid-Open (kokai) No. 5-222215 discloses a molded product for food packaging which is formed of a composition containing a polyvinyl alcohol resin and a compound selected from the group consisting of monomers of alkylene glycol and hydroxy acid and polymers of the monomers, the ratio of solubility of carbon dioxide gas to that of oxygen gas of the compound being not less than 30. In that publication, it is described that the film obtained from the molded product is suitable for packaging food products that are apt to generate significant volumes of carbon dioxide gas and are easily degraded through contact with oxygen gas, e.g., cheese products, coffee beans, etc.

In recent years, as diets of people have become more diversified, packaging films have come to have increased uses under conditions in which the films are exposed to cold water, hot water, or high temperature steam, as is seen in the cases of packaging of food with a high water content, heat treatment of food packaged in a retort pouch, and thawing at high temperatures. Accordingly, there is a demand for packaging film which has resistance (resistance to cold water and hot water) under such environments of use without inviting a reduction in separation efficiency of carbon dioxide gas, from the viewpoint of maintaining quality of the contents of the package. Because, if an ordinary gas impermeable plastic bag is used in packaging such as cheese mentioned above, the packaging bag will swell up with generated carbon dioxide and the bag is likely to break. Further the quality of the cheese will be deteriorated.

On the other hand, since oxygen accelerates the growth of molds and oxidizes the fat content of the cheese, packaging materials less permeable to oxygen gas have been desired for cheese packaging.

In view of the foregoing, the present inventors have conducted careful studies in an attempt to obtain a durable separator material which has excellent separating efficiency for carbon dioxide gas, leading to completion of the present invention.

Accordingly, a general object of the present invention is to economically provide a molded product, such as a film, which has resistance against hot water (such resistance may be referred to below as water resistance or hot water resistance) and which has selective gas permeability as expressed by a high ratio of carbon dioxide gas permeation rate to oxygen gas permeation rate.

According to a first aspect of the present invention, there is provided a molded product, such as film, having selective gas permeability which is formed from a reaction product of a polyacrylic acid and an aliphatic diamine, the molar ratio of said diamine with respect to the entirety of the carboxyl groups in said polyacrylic acid being between 0.2 and 2.0, wherein the absorbance ratio of N-H stretching vibration attributed to an amine salt having a maximum absorption wave number between 1,800 and 2,500 cm$^{-1}$ to C-H deformation vibration attributed to a methylene group having a maximum absorption wave number between 1,430 and 1,480 cm$^{-1}$ (N$^+$-H/CH) is between 0.001 and 0.11.

According to a second aspect of the invention, there is provided a molded product, such as film, having selective gas permeability which is formed from a reaction product of a polyacrylic acid and an aliphatic diamine, the molar ratio of said diamine with respect to the entirety of the carboxyl groups in said polyacrylic acid being between 0.2 and 2.0, wherein the amount of elution of the molded product upon being soaked in 80°C water for 1 hour is less than 50 weight% based on the original weight of the molded product.

According to a third aspect of the present invention, there is provided a method for manufacturing the above-mentioned molded product, such as film, of the present invention. That is, there is provided a method of manufacturing a molded product having selective gas permeability comprising the steps of:

(1) obtaining a reaction mixture of a polyacrylic acid and an aliphatic diamine, the molar ratio of said diamine with respect to the entirety of the carboxyl groups in said polyacrylic acid being between 0.2 and 2.0,
(2) molding the resultant reaction mixture, and
(3) performing a heat treatment of the resultant molded product between 100 and 300°C to obtain a reaction product.

The above and other objects, features, and advantages of the present invention will become apparent from the following description.

In the accompanying figures:

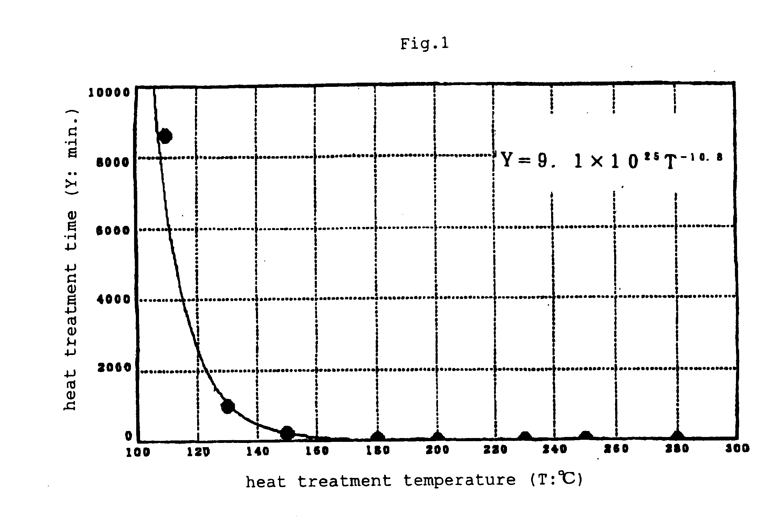

Fig. 1 is a graph showing the relation of the heat treatment temperature and heat treatment time of the heat treatments performed in Example 1, wherein X-axis represents the heat treatment temperature (T: °C) and Y-axis represents the heat treatment time (Y: min).

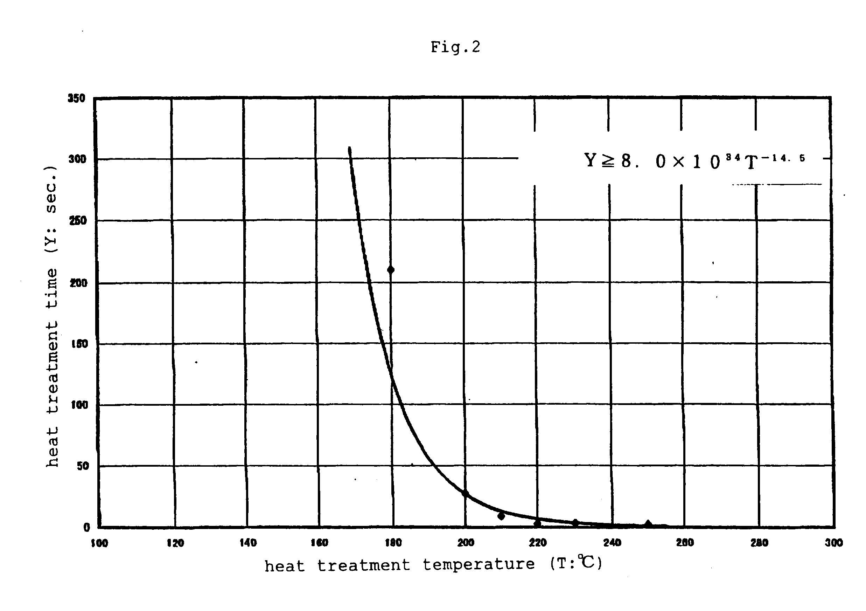

Fig. 2 is a graph showing the relation of the heat treatment temperature and heat treatment time which achieve the amount of elution of less than 50% based on the original weight after soaking in 80°C hot water for 1 hour, based on the heat treatments performed in Example 13 and Comparative Example 5, wherein X-axis represents the heat treatment temperature (T: °C) and Y-axis represents the heat treatment time (Y: second).

The present invention will next be described in detail.

The term "molded product" as used herein collectively refers to a product obtained by applying the reaction mixture of the present invention onto the surface of a substrate having an arbitrary shape, or by impregnating the surface of a substrate having an arbitrary shape with the reaction mixture. The term encompasses, for example, sheets, films, and sheets or films that have undergone further processing so as to have arbitrary shapes. The polyacrylic acids used for preparing the molded products, e.g., film, of the present invention having selective gas permeability are polyacrylic acids, polymethacrylic acids, or their mixtures which have 2 or more carboxyl groups in the molecule. Examples of preferred polyacrylic acids include homopolymers of acrylic acid or methacrylic acid, as well as copolymers of these monomers. Preferably, the number average molecular weight of the polyacrylic acids (hereinafter simply referred to as average molecular weight) is between 1,500 and 500,000.

When the average molecular weight is 1,500 or greater, the resultant molded products, e.g., film, do not cause problems in film-forming properties or in stability of the shape of the membrane. On the other hand, the average molecular weight of 500,000 or smaller is preferred, in view of the facts that under this condition handling of the products, particularly films, during manufacture does not usually become problematic (when polyacrylic acids are used in the form of aqueous solutions, the viscosity of the solutions becomes high). In consideration of the shape-retaining properties of the resultant film, ease in handling during manufacture, etc., it is more preferred that the average molecular weight be between 50,000 and 450,000, and it is particularly preferred that the average molecular weight be between 70,000 and 300,000.

The aliphatic diamines used in the present invention are not particularly limited. Examples of aliphatic diamines include, but are not limited to, aliphatic primary diamines, aliphatic secondary diamines, aliphatic tertiary diamines, alicyclic primary diamines, alicyclic secondary diamines, and alicyclic tertiary diamines. Of these, aliphatic primary diamines are preferred, with linear aliphatic primary diamines having an amino group at either end of the carbon chain being particularly preferred. The number of carbon atoms contained in the carbon chain (which may be branched) constituting an aliphatic primary diamine is preferably between 2 and 8 inclusive, and more preferably 2 and 4 inclusive. Specific examples of preferred aliphatic primary diamines include ethylene diamine, trimethylene diamine, and tetramethylene diamine.

The aliphatic diamine is used in a molar ratio of 0.2 to 2.0 with respect to the entire carboxyl groups of the polyacrylic acids; i.e., the ratio of the mole number of the aliphatic diamine to the mole number of the entire carboxyl groups of the polyacrylic acid is 0.2-2.0. When the molar ratio is less than 0.2, films that have intended selective gas permeability cannot be obtained. In addition, the molar ratio of less than 0.2 is not preferred in consideration of possible generation of insoluble matter (gel) in the reaction mixture when an aliphatic primary diamine is used as the aliphatic diamine. On the other hand, when the molar ratio of the aliphatic diamine to the entirety of the carboxyl groups in the polyacrylic acid is in excess of 2.0, the resultant film becomes sticky, thus raising a problem in practice. In consideration of the mechanical characteristics, thermal properties, selective gas permeability, etc. of the film that affect manufacture and practice, the molar ratio of the aliphatic diamine to the entirety of the carboxyl groups in the polyacrylic acid is preferably between 0.4 and 1.5, and more preferably between 0.4 and 1.2.

The molded product preferably has the shape of a sheet because sheets realize full utilization of the selective gas permeability of the present invention. Hereinafter, a description will be given of the manufacturing method of the present invention, taking film as an example. First, a sheet-shaped product is formed from a reaction mixture of predetermined amounts of the polyacrylic acid and the aliphatic diamine. The thus-formed sheet-shaped product is thermally treated at a temperature between 100 and 300°C, to thereby obtain a film. The polyacrylic acid is generally used after being dissolved or dispersed in water or in a solvent mixture of water and alcohol. Preferably, a 3-45 weight % aqueous solution, more preferably a 5-30 weight % aqueous solution, of a polyacrylic acid is prepared, and to the resultant aqueous solution is added a predetermined amount of an aliphatic diamine, which is used as is or after being diluted with water or a water-alcohol solvent mixture. The reaction between the polyacrylic acid and the aliphatic diamine proceeds almost quantitatively at room temperature, to thereby yield a reaction mixture. The liquid containing the reaction mixture is cast or applied by way of coating onto a substrate such as other film or metal foil, and subsequently, the solvent such as water or alcohol is evaporated, to thereby obtain a sheet-shaped product. When this sheet-shaped product is thermally treated, the film of the present invention having resistance to hot water can be obtained.

Moreover, when products whose substrates have a complicated shape, for example, hollow cylindrical products, tubular products, and a variety of containers, are manufactured, an immersion method may be performed; i.e., the substrates may be first immersed in the reaction mixture, followed by evaporation of moisture and heat treatment. In the present invention, "having resistance" (e.g. resistance to hot water) means having such a property that the amount of elution after the product is soaked in 1.5 liters of 80°C hot water for 1 hour with stirring under conditions described below is less than 50 % of the original weight.

Heat treatment is performed by holding in an atmosphere between 100 and 300°C a sheet-shaped product that has been applied with a reaction mixture and dried or an immersion-coated product that has been dried. If the heat treatment temperature is less than 100°C, films having resistance to hot water may not always be obtained. In addition, there arises the economical problem due to, for example, prolonged time for manufacturing. On the other hand, if the heat treatment temperature is in excess of 300°C, there is invited the risk of coloring or decomposition of the resultant film. In order to secure an excellent shape retainability of the resultant molded product such as a film, the heat treatment temperature is preferably between 110 and 290°C, and more preferably between 150 and 280°C from the viewpoints of ease of manufacture and economy. The upper limit of heat treatment time is determined so as not to invite coloring or decomposition of the resultant molded products such as a film, whereas the lower limit of the heat treatment time is determined so as not to impair the desired properties, productivity, and cost performance of the target products. The heat treatment time may be arbitrarily determined between such upper and lower limits.

When the heat treatment of a sheet-shaped product is performed in a hot and dry atmosphere as realized in a Gear oven aging tester(Gear oven) or by a hot air dryer, the heat treatment conditions as defined by the following expressions (a) and (b) are preferred:

$$(a) \qquad Y \geqq 9.1 \times 10^{25} T^{-10.8}$$

$$(b) \qquad 100 \leqq T \leqq 300$$

wherein Y represents the time during which heat treatment is performed (minutes) and T represents the temperature at which heat treatment is performed (°C).

Specifically, preferred heat treatment comprises any of the following: 280°C x 20 seconds or more; 250°C x 1 minute or more; 230°C x 3 minutes or more, 200°C x 5 minutes or more; and 180°C x 40 minutes or more, in order to economically manufacture a film having intended properties.

Besides the heat treatment performed in a hot and dry atmosphere such as in a Gear oven, use of a hot roll is also preferred (hot roll method). This method, being characterized by its high processing speeds, requires a shorter heat treatment time, and therefore is preferred in consideration of improved productivity. It is preferred that the heat treatment satisfy the conditions of the following expressions (c) and (d).

$$(c) \qquad Y \geqq 8.0 \times 10^{34} T^{-14.5}$$

$$(d) \qquad 100 \leqq T \leqq 300$$

wherein Y represents the time during which heat treatment is performed (seconds) and T represents the temperature at which heat treatment is performed (°C).

Specifically, a temperature range of 150-280°C is preferred. In consideration of ease of manufacture and economy, a temperature range of 180-260°C is particularly preferred. In practice, heat treatment of 200°C x 30 seconds or more, 230°C x 5 seconds or more, or 250°C x 5 seconds or more is particularly preferred.

When a film having selective gas permeability according to the present invention is used solely, the film is peeled from its substrate before use. On the other hand, when the film is used as a layered product including a film having selective gas permeability and a substrate, the film is used without being peeled from the substrate. In the latter case, however, the material for forming the substrate of the layered product should be suitably selected in accordance with the purpose of use, etc.

The reaction mixture of polyacrylic acid and aliphatic diamine may further contain a variety of stabilizers, lubricants, colorants, fillers, etc. as required, so long as the effect of the present invention is not impeded.

The ratio of carbon dioxide gas permeation rate to oxygen gas permeation rate ($CO_2$ gas permeation rate/$O_2$ gas permeation rate) of the film having selective gas permeability according to the present invention is not less than 15, preferably not less than 20, and more preferably not less than 22, as measured at 23°C and a relative humidity of 80%. If the ratio is smaller than 15, efficiency for separating carbon dioxide gas is poor and is problematic in practice. In order to obtain a packaging material superior to conventional membranes having selective gas permeability for food packaging, the film of the invention preferably has a permeation rate ratio of 20 or greater, e.g. a permeation rate ratio of 22 or greater.

The film having selective gas permeability according to the present invention exhibits durability in the presence of cold water, hot water, and in an environment of high temperature (about 50°C) and high humidity. The film of the invention is characterized by its resistance to water as defined herein. The durability and the resistance to water are obtained from the aforementioned heat treatment. It is considered that these properties are attributed to amide bonds formed in the reaction mixture during the heat treatment. When polyacrylic acid is reacted with aliphatic diamine at ambient temperature, an amine salt of the polyacrylic acid is formed. However, the amount of the produced amine salt decreases when the reaction mixture undergoes a heat treatment. This can be confirmed by the infrared absorption spectrum in which a decrease due to heat treatment can be seen in absorbance of N-H stretching vibration attributed to an amine salt that has a maximum absorption wave number between 1,800 and 2,500 cm$^{-1}$. Therefore, the ratio of this absorbance to the absorbance of C-H deformation vibration attributed to a methylene group ($-CH_2-$); i.e., the ratio $N^+H/CH$ (hereinafter referred to as absorbance ratio), is used as an index of durability and resistance to water. The absorbance ratio must fall within the range of 0.001 to 0.11. The absorbance ratio is preferably between 0.005 and 0.105, and more preferably between 0.01 and 0.10. When the absorbance ratio is in the above ranges, the resultant molded product (e.g., film) exhibits durability and resistance to water in the presence of cold water, hot water, and in an environment of high temperature (about 50°C) and high humidity (about 80% RH), as well as selective gas permeability. As used herein, the term "selective gas permeability" is intended to refer to the ratio of carbon dioxide gas permeation rate to oxygen gas permeation rate ($CO_2$ gas permeation rate/$O_2$ gas permeation rate) of not less than 10 as measured at 23°C and a relative humidity of 80%. In practice, the gas permeation ratio is preferably not less than 15, and more preferably not less than 20.

When the polyacrylic acid is polyacrylic acid and the aliphatic diamine is ethylenediamine, the formation of amide bonds during heat treatment may also be confirmed through NMR as evidenced by the presence of a shoulder or peak appearing in the range of 180 +/- 3 ppm, which is considered to be attributed to carbonyl carbons in amide bonds.

The term "resistance to hot water" which expresses excellent property possessed by the film of the present invention is intended to mean that the amount of elution of the film upon being soaked in 80°C water for 1 hour is less than 50 weight%, preferably less than 40 weight%, based on the original weight of the film. In other words, the weight of the film after being soaked is 50 percent or more, preferably 60 percent or more, of the weight before being soaked.

Since the amount of elution of the film after being soaked is less than 50 weight% under the conditions described above, the film is not vulnerable to damage when exposed to cold water, hot water, or high temperature steam. From the viewpoints of durability and advantages in practice, the amount of elution after soaking of the film is preferably less than 40 weight% under the conditions described above.

The film h aving selective gas permeability according to the present invention may be used alone or in the form of a layered product including at least one layer of the film and a substrate. The substrate of the layered product is not particularly limited so long as the layered product itself has a ratio of carbon dioxide gas permeation rate to oxygen gas permeation rate of not less than 15, preferably 17, as measured at 23°C and a relative humidity of 80%. Examples of preferred materials for the substrate include thermoplastic resins, thermosetting resins, paper, woven fabrics, and metal foils. Specifically, there may be used synthetic paper, non-woven fabrics, porous membranes of a thermoplastic resin, molded products of a thermoplastic resin, stretched or unstretched films of a thermoplastic resin, and metallic porous membranes.

The layer structure of the layered product is not particularly limited. Illustrative examples of the layer structure include a two-layered structure consisting of a layer of film having selective gas permeability and a substrate, and a three- or multilayered layer structure in which a substrate layer is placed on either side of a film layer having selective gas permeability. One preferred example is a multilayered structure constituted by two substrate layers that serve as the two outermost layers and at least one intermediate layer formed of film having selective gas permeability. Specific examples of such a preferred structure include multilayered structures in which two substrate layers formed of a thermoplastic resin constitute two outermost layers, and a layer formed of the invention film constitutes at least one intermediate layer; and multilayered structures in which a substrate layer formed of paper constitutes one of the two outermost layers, another substrate layer formed of a thermoplastic resin constitutes the other outermost layer, and a layer formed of the invention film constitutes at least one intermediate layer.

Alternatively, a heat-sealing layer which has conventionally been known may be provided on either side of a layered product, so as to permit fusion with another layered product or with another thermoplastic resin film. Moreover, there may be present a plurality of film layers having selective gas permeability. If necessary, an adhesive layer which will be described below may be interposed between two adjacent layers, arbitrary or specified. By forming a layered structure, strength during practical use, water repellency, and heat-sealing properties can be obtained.

The thickness of the film having selective gas permeability according to the present invention prepared from a polyacrylic acid and an aliphatic diamine is not particularly limited. Generally, the thickness is between 0.5 and 1,000 micrometers, and preferably between 1 and 500 micrometers and more preferably between 1.5 and 300 micrometers. If the thickness of the film is less than 0.5 micrometers, not only is it difficult to control the film thickness, but also intended selective gas permeability may not be obtained. On the other hand, if the film thickness is excess of 1,000 micrometers, uniform films are difficult to obtain, and disadvantages in terms of economy such as prolonged manufacturing time will be incurred. When a coating film is formed on a substrate having a complicated shape, the same criteria are applied to the thickness of the film. The thickness of the entirety of a layered product of the present invention, which is not particularly limited, is between 20 micrometers and 10 mm, and preferably between 30 micrometers and 5 mm. If the thickness of the layered product is less than 20 micrometers, the product does not stably retain its shape, raising drawbacks such as weak strength during use. On the other hand, if the thickness is in excess of 10 mm, ease of manufacture and economical advantages are not secured.

A layered product of the present invention is prepared by first subjecting a reaction mixture (generally in the form of an aqueous solution) of a polyacrylic acid and an aliphatic diamine to a film-forming process through use of a casting method, coating method, etc., or a kneading-extrusion method when the reaction mixture is not an aqueous solution, among which a coating method is particularly preferred, so as to obtain a film, and by subsequently affixing the film with a substrate through use of a dry lamination method or an extrusion coating lamination method. In order to improve the adhesive strength between layers, there may also be used, as required, adhesives and anchors including polyolefins obtained by graft-denaturing a polyolefin (linear low density polyethylene) with an unsaturated carboxylic acid such as maleic acid, fumaric acid, or acrylic acid, or an acid anhydride thereof; copolymers of these unsaturated carboxylic acids and olefins; mixtures of unmodified polyolefins and the aforementioned grafted polyolefins or copolymers, or polyesters having urethane bonds.

Since the film having selective gas permeability provided by the present invention has a high ratio of $CO_2$ gas permeation rate to $O_2$ gas permeation rate and exhibits excellent durability (resistance to water) when exposed to cold water, hot water, or used in an environment of high temperature (about 50°C) and high humidity, it is industrially suitable for separating carbon dioxide gas from combustion exhaust gases containing carbon dioxide gas or from gases occurring in nature. The film of the present invention finds utility in the food industry, particularly for manufacturing packaging materials for foods with a high water content, foods that are apt to generate carbon dioxide gas, foods for retort use, and frozen foods.

Examples

The present invention will next be described by way of examples, which should not be construed as limiting the invention.

In the present invention, the following methods were used for measuring the physical properties.

Measurement of the oxygen gas permeation rate

The oxygen gas permeation rate [$cm^3/(cm^2 \times Mpa \times s)$] of a layered product was measured by use of an apparatus for measuring the oxygen gas permeation rate (Model Ox-tran 2/20 by Modern Control) at 23°C and relative humidity of 80%, in accordance with equation (1) below.

Measurement of the carbon dioxide gas permeation rate

The carbon dioxide gas permeation rate [$cm^3/(cm^2 \times Mpa \times s)$] of a layered product was measured by use of an apparatus for measuring the carbon dioxide gas permeation rate (Model PERMATRANC-IV by Modern Control) at 23°C and relative humidity of 80%, in accordance with the following equation (1).

$$1/P(total) = 1/P(film) + 1/P(sub) \qquad (1)$$

wherein "P(total)" represents a gas permeation rate of an entirety of a layered product including a substrate and a film having selective gas permeability and formed thereon by way of coating, "P(film)" represents a gas permeation rate of a film having selective gas permeability, and "P(sub)" represents a gas permeation rate of a substrate.

Measurement of the ratio of carbon dioxide gas permeation rate to oxygen gas permeation rate

Using the values of the carbon dioxide gas permeation rate and the oxygen gas permeation rate obtained from performing the above-described methods, the ratio of carbon dioxide gas permeation rate to oxygen gas permeation rate was computed.

Resistance to water

Resistance to water was determined as follows. A test piece of a film having selective gas permeability according to the present invention (single-layered film) having a size of 10 cm x 10 cm was soaked for 1 hour in 1.5 liter of 80°C water placed in a 2-liter beaker, while being stirred with a magnetic stirrer equipped with a rotor of 55 mm in length and 6 mm in diameter at 150 rpm. Thereafter, the test piece was removed from the hot water and dried at 105°C for 1 hour, and the weight was measured. The amount of elution (weight%) indicative of the resistance to water was obtained from the equation (2) below. The amount of elution of the film having selective gas permeability from a layered product including a film having selective gas permeability and a substrate layer was obtained by first soaking a test piece of a layered film having a size of 10 cm x 10 cm for 1 hour in 1.5 liter of 80°C water placed in a 2-liter beaker, while being stirred with a magnetic stirrer equipped with a rotor of 55 mm in length and 6 mm in diameter at 150 rpm, removing the test piece from the hot water, drying it at 105°C for 1 hour, and measuring the weight. The weight of the substrate was subtracted from the weight values of the sample layered product before and after soaking. The amount of elution (weight%) was computed from the following representation (2).

Those samples that had an elution amount of less than 50 weight% are considered as having resistance to water. Conversely, samples that had an elution amount of 50 weight% or greater are considered not to have resistance to water.

$$[(M1-M2)/M1] \times 100 \qquad (2)$$

wherein M1 represents the weight (g) of the film before being soaked and M2 represents the weight (g) of the film after being soaked.

Measurement of absorbance ratio ($N^+$-H/CH) by Infrared Spectrophotometer(IR)

Irrespective of the kind of the substrate used in the layered product, a 1 cm x 4 cm sample was cut from each layered product. Measurement was performed by use of an FT-IR(Fourier transform infrared spectrophotometer: Model FT-IR 8200, by Shimazu Seisakusho). The coating layer of each sample was brought into contact with a prism (KRS-5), and measurement was performed by a reflection method. The resolving power was 4 cm$^{-1}$, and the measurement was performed at 25°C. Based on the infrared absorption spectrum, there was computed the absorbance rate ratio of the absorbance of N-H stretching vibration attributed to an amine salt having a maximum absorption wave number between 1,800 and 2,500 cm$^{-1}$ to that of C-H deformation vibration attributed to a methylene group having a maximum absorption wave number between 1,430 and 1,480 cm$^{-1}$.

<u>NMR measurement</u>

A single film layer of the present invention was dried in vacuo at 25°C for 48 hours. Subsequently, the dry film was ground in a mortar so as to obtain a powder sample. The sample (100 mg) was subjected to NMR (apparatus used: Model EX-270, by Nippon Denshi K.K.). The probe employed was for use with solid $^{13}$C-NMR, and a CP-WEIGHT method was used with measurement performed at 25°C. From the obtained NMR spectrum there was investigated the presence or absence of a peak that appears within the range of 183-187 ppm and is attributed to carbonyl groups of the polyacrylic acid considered to have formed an amine salt, as well as the presence or absence of a peak or shoulder that appears within the range of 177-183 ppm and is attributed to carbonyl groups of the amide bonds.

<u>Example 1 and Comparative Example 1</u>

The polyacrylic acid (hereinafter abbreviated as PAA) employed in these examples was 25 weight% aqueous solution of PAA (by Wako Pure Chemical Industries, Ltd., average molecular weight 150,000), and the aliphatic diamine employed was ethylene diamine manufactured by Wako Pure Chemical Industries, Ltd. A 25 weight% aqueous PAA solution was diluted to 10 weight% with water. Subsequently, to 1000 parts by weight of the resultant aqueous PAA solution (100 parts by weight in terms of a solid content) were added 66.7 parts by weight of ethylene diamine, to thereby cause the molar ratio of ethylene diamine with respect to the entirety of the carboxyl groups of PAA of 0.8, and the mixture was stirred with a glass rod, to thereby obtain a reaction mixture almost quantitatively. Thereafter, the aqueous solution containing the reaction mixture was applied by way of coating onto an aluminum sheet having a thickness of 50 micrometers (by Sun Aluminum Industries, Co.) with a mayer bar. The coated sheet was placed in a dryer and dried at 90°C for 20 minutes so as to evaporate moisture, to thereby obtain a layered intermediate having an aluminum sheet substrate and a sheet-shaped product (dry film) provided thereon, the sheet-shaped product being formed of a reaction mixture of PAA and ethylene diamine and having a thickness of 5 micrometers. A plurality of the thus-prepared intermediates were retained in a Gear oven for heat treatment of 280°C x 20 seconds, 250°C x 1 minute, 230°C x 3 minutes, 200°C x 5 minutes, 180°C x 40 minutes, 150°C x 4 hours, 130°C x 17 hours, or 110°C x 144 hours. Thus, eight different layered products, each having an aluminum sheet substrate and a film having selective gas permeability of the present invention superposed thereon, were obtained (thickness in total of each product: 55 micrometers) (Example 1).

Independently, comparative products were prepared (Comparative Example 1) by forming a layered intermediate having an aluminum sheet substrate employed in Example 1 and a sheet-shaped product (dry film without undergoing heat treatment) provided thereon, the sheet-shaped product being formed of a reaction mixture of PAA and ethylene diamine and having a thickness of 5 micrometers. Among a plurality of the thus-prepared intermediates, one was not subjected to heat treatment, and the others were subjected to the following eight different heat treatments: 280°C x 10 seconds, 250°C x 30 seconds, 230°C x 1 minute, 200°C x 3 minutes, 180°C x 30 minutes, 150°C x 3 hours, 130°C x 13 hours, or 110°C x 100 hours. As a result, nine different layered products, each having an aluminum sheet substrate and a film for comparison superposed thereon, were obtained (thickness in total of each specimen: 55 micrometers) (Comparative Example 1).

From each of the thus-obtained 17 different layered films of Example 1 and Comparative Example 1, specimens each having a size of 10 cm x 10 cm were cut, and their resistance to water was assessed. The specimens were soaked in 80°C hot water for 1 hour. (Since the film was exfoliated from the aluminum sheet substrate soon after the start of soaking, the aluminum sheet was removed from the hot water.) Subsequently, the film was taken out of the hot water, dried at 105°C for 1 hour, the weight was measured, and the amount of elution (weight%) was computed. The results of assessment in terms of resistance to water and absorbance ratio (N$^+$-H/CH) from the IR spectrum are shown in Table 1.

Table 1

| | Molar Ratio[*1] | Heat treament conditions | | Resistance to water[*2] (Weight%) | (N$^+$-H/CH) Absorbance ratio |
|---|---|---|---|---|---|
| | | Temp. (°C) | Time (hrs) | | |
| Ex. 1 | 0.8 | 110 | 144 | 32 | 0.071 |
| | 0.8 | 130 | 17 | 33 | 0.079 |
| | 0.8 | 150 | 4 | 35 | 0.091 |
| | 0.8 | 180 | 0.667 | 33 | 0.093 |
| | 0.8 | 200 | 0.083 | 38 | 0.095 |
| | 0.8 | 230 | 0.050 | 30 | 0.092 |
| | 0.8 | 250 | 0.017 | 31 | 0.089 |
| | 0.8 | 280 | 0.006 | 30 | 0.090 |
| Comp. Ex. 1 | 0.8 | - | - | 100 | 0.126 |
| | 0.8 | 100 | 100 | 100 | 0.112 |
| | 0.8 | 130 | 13 | 100 | 0.115 |
| | 0.8 | 150 | 3 | 100 | 0.113 |
| | 0.8 | 180 | 0.500 | 100 | 0.117 |
| | 0.8 | 200 | 0.050 | 100 | 0.111 |
| | 0.8 | 230 | 0.017 | 100 | 0.112 |
| | 0.8 | 250 | 0.008 | 100 | 0.114 |
| | 0.8 | 280 | 0.003 | 100 | 0.113 |

*1: Molar ratio of ethylenediamine with respect to the entire carboxyl groups of PAA

*2: Amounts of elution after soaking for 1 hr at 80°C (weight%)

Fig. 1 is a graph showing the relation of the heat treatment temperature and heat treatment time of the heat treatments performed in Example 1, wherein X-axis represents the heat treatment temperature (T: °C) and Y-axis represents the heat treatment time (Y: min). From the plottings (solid dots) was obtained a regression curve shown in a solid line, which is expressed by the following equation:

$$Y = 9.1 \times 10^{25} T^{-10.8} \text{ (correlation coefficient: 0.992).}$$

Thus, heat treatment conditions for obtaining the film of the present invention, i.e., the film having resistance to hot water are such that the heat treatment temperature is within the range of the aforementioned expression (b): 100 ≦ T ≦ 300 and within the area above the above-mentioned curve (right-hand side of the curve); i.e., the area that satisfy the aforementioned expression

$$\text{(a):} \quad Y \geqq 9.1 \times 10^{25} T^{-10.8}.$$

Examples 2 through 7, and Comparative Examples 2 and 3

A thousand (1,000) parts by weight of the 10 weight% aqueous PAA solution employed in Example 1 were used in each of these examples (solid content: 100 parts by weight). To the aqueous solution was added ethylene diamine in different amounts: 41.7 parts by weight (Comparative Example 2), 166.7 parts by weight (Example 2), 333.3 parts by weight (Example 3), 583.3 parts by weight (Example 4), 833.3 weight parts (Example 5), 1250 parts by weight (Example 6), 1666.7 parts by weight (Example 7), and 1916.7 parts by weight (Comparative Example 3), so as to obtain the following different values of the molar ratio of ethylene diamine to the entire carboxyl groups of PAA: 0.05 (Comparative Example 2), 0.2 (Example 2), 0.4 (Example 3), 0.7 (Example 4), 0.9 (Example 5), 1.5 (Example 6), 2.0 (Example 7), and 2.3 (Comparative Example 3). The procedure of Example 1 was repeated, to thereby obtain aqueous solutions each containing a reaction mixture. Each aqueous solution was applied by way of coating with a mayer bar onto poly 4-methyl-1-pentene film (hereinafter referred to as "PMP film," TPX film manufactured by Mitsui Petrochemical Co., Ltd.) having a thickness of 40 micrometers and having been undergone corona discharge treatment. Similar to the process in Example 1, moisture was evaporated by use of a drier, to thereby obtain layered intermediates each having a PMP film substrate and a sheet-shaped product provided thereon, the sheet-shaped product being formed of a reaction mixture of PAA and ethylene diamine and having a thickness of 5 micrometers. The thus-prepared intermediates were subjected to a heat treatment of 200°C x 5 minutes by use of a Gear oven, so as to obtain layered products, each having a PMP film substrate and a film having selective gas permeability of the present invention or a comparative film superposed thereon (thickness in total of each product: 45 micrometers). Since the layered product of Comparative Example 3 had a considerably sticky coat surface and was problematic in use, this specimen was excluded, and the rest of the specimens were assessed in terms of selective gas permeability and resistance to water. That is, through measurement of the oxygen gas permeation rate and the carbon dioxide gas permeation rate of each layered product, the ratio of $CO_2$ gas permeation rate to $O_2$ gas permeation rate of the layered product was obtained. Similarly, through measurement of the oxygen gas permeation rate and the carbon dioxide gas permeation rate of each film of the present invention having selective gas permeability, the ratio of $CO_2$ gas permeation rate to $O_2$ gas perme-ation rate was obtained. Also, the resistance to water and absorbance ratio ($N^+$-H/CH) by IR of each film of the present invention having selective gas permeability were measured. The results are shown in Table 2. The substrate PMP film (thickness: 40 micrometers) had an oxygen gas permeation rate of 41,325 $cm^3/cm^2 \cdot MPa \cdot s$ and carbon dioxide gas permeation rate of 156,750 $cm^3/cm^2 \cdot MPa \cdot s$ at 23°C and relative humidity of 80%.

Table 2

| | Aliphatic diamine | Molar ratio[*1] | Heat treatment conditions | | Resistance to water[*5] | Gas permeation rates[*4] and ratio of permeation rates | | | | | | $(N^+-H/CH)$ Absorbance ratio |
| | | | Temp. (°C) | Time (hrs) | | Single film | | | Multilayered product | | | |
| | | | | | (weight%) | $O_2$ | $CO_2$ | $CO_2/O_2$ | $O_2$ | $CO_2$ | $CO_2/O_2$ | |
| Comp. Ex. 2 | EDA[*2] | 0.05 | | | 100 | 1900 | 15000 | 8 | 1800 | 14000 | 8 | 0.0008 |
| Ex. 2 | Ditto | 0.2 | | | 37 | 1700 | 31000 | 18 | 1600 | 26000 | 16 | 0.028 |
| Ex. 3 | Ditto | 0.4 | | | 36 | 1600 | 40000 | 25 | 1500 | 32000 | 21 | 0.061 |
| Ex. 4 | Ditto | 0.7 | 200°C 0.083 hrs | | 36 | 2100 | 18000 | 86 | 2000 | 84000 | 42 | 0.085 |
| Ex. 5 | Ditto | 0.9 | | | 38 | 2600 | 28000 | 108 | 2400 | 100000 | 40 | 0.090 |
| Ex. 6 | Ditto | 1.5 | | | 37 | 2300 | 22000 | 95 | 2200 | 92000 | 42 | 0.095 |
| Ex. 7 | Ditto | 2.0 | | | 39 | 2700 | 28000 | 103 | 2500 | 100000 | 40 | 0.106 |
| Comp. Ex. 3 | Ditto | 2.3 | | | —[*3] | —[*3] | —[*3] | —[*3] | —[*3] | —[*3] | —[*3] | 0.113 |

*1: Molar ratio of ethylenediamine with respect to the entire
carboxyl groups of PAA

EDA[*2] : Ethylenediamine

*3: Measurement was not conducted because the film surface was considerably sticky.

*4: Unit $(cm^3/cm^2 \cdot MPa \cdot s)$

*5: Amounts of elution after soaking for 1 hr at 80°C (weight%)

EP 0 796 885 A2

Examples 8 through 10 and Comparative Example 4

The 10 weight% aqueous PAA solution employed in Example 1 was used. To 1,000 parts by weight of the aqueous PAA solution (solid content: 100 parts by weight) were added an amine in such an amount to cause the molar ratio of the amine to the entire carboxyl groups of PAA to be 1.0. Namely, there were added 83.3 parts by weight of ethylene diamine as a representative of an aliphatic diamine (Example 8), 102.8 parts by weight of trimethylene diamine also as a representative of an aliphatic diamine (Example 9), 122.2 parts by weight of tetramethylene diamine also as a representative of an aliphatic diamine (Example 10), or 152.4 parts by weight of an aromatic monoamine, m-aminophenol, as a monoamine (Comparative Example 4), to thereby obtain aqueous solutions each containing a reaction mixture. Each aqueous solution was applied by way of coating with a mayer bar onto the PMP film employed in Examples 2 through 7. Similar to the process in Example 1, moisture was evaporated by use of a drier, to thereby obtain layered intermediates each having a PMP film substrate and a sheet-shaped product provided thereon, the sheet-shaped product (dry film without undergoing heat treatment) being formed of a reaction mixture of PAA and an amine and having a thickness of 5 micrometers. The thus-prepared intermediates were subjected to a heat treatment of 130°C x 18 hours, 150°C x 5 hours, or 180°C x 50 minutes by use of a Gear oven, so as to obtain layered products, each having a PMP film substrate and a film having selective gas permeability of the present invention or a comparative film superposed thereon (thickness in total of each product: 45 micrometers).

For each layered product were determined the oxygen gas permeation rate, the carbon dioxide gas permeation rate, and the ratio of $CO_2$ gas permeation rate to $O_2$ gas permeation rate. Also, for each film having selective gas permeability of the present invention were determined the oxygen gas permeation rate, the carbon dioxide gas permeation rate, the ratio of $CO_2$ gas permeation rate to $O_2$ gas permeation rate, as well as resistance to water. The results are shown in Table 3.

Table 3

| | Amine | Molar ratio[1] | Heat treatment conditions | | Resistance to water[4] | Gas permeation rates[3] and ratio of permeation rates | | | | | |
|---|---|---|---|---|---|---|---|---|---|---|---|
| | | | Temp. (°C) | Time (hrs) | (weight%) | Single film | | | Multilayered product | | |
| | | | | | | $O_2$ | $CO_2$ | $CO_2/O_2$ | $O_2$ | $CO_2$ | $CO_2/O_2$ |
| Ex. 8 | EDA[2] | 1.0 | 130 | 18 | 35 | 1900 | 210000 | 110 | 1800 | 90000 | 50 |
| | | | 150 | 5 | 33 | 2500 | 210000 | 84 | 2400 | 90000 | 38 |
| | | | 180 | 0.833 | 37 | 2300 | 270000 | 117 | 2200 | 99000 | 45 |
| Ex. 9 | Trimethylene diamine | 1.0 | 130 | 18 | 34 | 3000 | 110000 | 37 | 2800 | 64000 | 23 |
| | | | 150 | 5 | 34 | 3400 | 110000 | 32 | 3100 | 65000 | 21 |
| | | | 180 | 0.833 | 39 | 3200 | 100000 | 31 | 3000 | 61000 | 20 |
| Ex. 10 | Tetramethylene diamine | 1.0 | 130 | 18 | 38 | 3600 | 80000 | 22 | 3300 | 53000 | 16 |
| | | | 150 | 5 | 31 | 3700 | 92000 | 25 | 3400 | 58000 | 17 |
| | | | 180 | 0.833 | 33 | 3960 | 85000 | 22 | 3600 | 55000 | 15 |
| Comp. Ex. 4 | Monoethanol amine | 1.0 | 130 | 18 | 68 | 1800 | 7200 | 4 | 1900 | 7600 | 4 |
| | | | 150 | 5 | 72 | 1600 | 6400 | 4 | 1700 | 6700 | 4 |
| | | | 180 | 0.833 | 78 | 1700 | 6800 | 4 | 1800 | 7100 | 4 |

*1: Molar ratio of amine with respect to the entire carboxyl groups of PAA

EDA[2] : Ethylenediamine

*3: Unit $(cm^3/cm^2 \cdot MPa \cdot s)$

*4: Amounts of elution after soaking for 1 hr at 80°C (weight%)

<u>Examples 11 and 12</u>

The 25 weight% aqueous PAA solution prepared in Example 1 was used. To 400 parts by weight of the solution (solid content: 100 parts by weight) were added 79.1 parts by weight of ethylene diamine so as to cause the molar ratio of ethylene diamine to the entire carboxyl groups of PAA to be 0.95. Subsequently, water (637.3 parts by weight) was added thereto so as to obtain a solution having a concentration of the total of PAA and ethylene diamine of 25 weight%. Similar to Example 1, an aqueous solution containing a reaction mixture was obtained. The resultant aqueous solution was applied onto paper having a thickness of 100 micrometers (manufactured by Furubayashi Shiko K.K.; thinly coated paper (relatively thick)), and moisture was evaporated by use of a drier, to thereby obtain a layered intermediate with a coating of a 2-micrometer-thick, sheet-shaped product formed from a reaction mixture of PAA and ethylene diamine. The thus-prepared intermediate was subjected to a heat treatment of 130°C x 18 hours, 150°C x 5 hours, or 180°C x 50 minutes by use of a Gear oven, so as to obtain three different layered products, each having a paper substrate and a film having selective gas permeability of the present invention. Through use of the thus-prepared layered product, ethylene - vinyl acetate copolymer (hereinafter abbreviated as "EVA"; manufactured by Nippon Unikar, NUC, vinyl acetate content: 7.5 weight%) was laminated onto the surface of the film having selective gas permeability by an extrusion coating lamination method, to thereby obtain three kinds of layered products (structure: paper - film having selective gas permeability of the present invention - EVA; thickness: 100 micrometers - 2 micrometers - 20 micrometers) (Example 11).

Similar to Example 11, the heat treatment was performed on the same type of PMP films (the thickness being changed to 20 micrometers) employed in Examples 2 through 7, as a replacement of the paper employed in Example 11, to thereby obtain three kinds of layered products (structure: PMP - film having selective gas permeability of the present invention - EVA; thickness: 20 micrometers - 2 micrometers - 20 micrometers) (Example 12). For each layered product were determined the oxygen gas permeation rate, the carbon dioxide gas permeation rate, and the ratio of $CO_2$ gas permeation rate to $O_2$ gas permeation rate. Also, for each film having selective gas permeability of the present invention were determined the oxygen gas permeation rate, the carbon dioxide gas permeation rate, the ratio of $CO_2$ gas permeation rate to $O_2$ gas permeation rate, as well as resistance to water. The results are shown in Table 4. The substrate PMP film (thickness: 20 micrometers) had an oxygen gas permeation rate of 82,650 $cm^3/cm^2 \bullet MPa \bullet s$ and carbon dioxide gas permeation rate of 313,500 $cm^3/cm^2 \bullet MPa \bullet s$ at 23°C and relative humidity of 80%. On the other hand, the EVA film (thickness: 20 micrometers) had an oxygen gas permeation rate of 13,000 $cm^3/cm^2 \bullet MPa \bullet s$ and carbon dioxide gas permeation rate of 54,000 $cm^3/cm^2 \bullet MPa \bullet s$ under the same measurement conditions.

Table 4

| | Amine | Molar ratio[1] | Heat treatment conditions | | Resistance to water[4] (weight%) | Gas permeation rates[3] and ratio of permeation rates | | |
|---|---|---|---|---|---|---|---|---|
| | | | Temp. (°C) | Time (hrs) | | Multilayered product | | |
| | | | | | | $O_2$ | $CO_2$ | $CO_2/O_2$ |
| Ex. 11 | EDA[2] | 0.95 | 130 | 18 | 32 | 900 | 45000 | 50 |
| | | | 150 | 5 | 37 | 880 | 46000 | 52 |
| | | | 180 | 0.833 | 34 | 920 | 45000 | 49 |
| Ex. 12 | EDA | 0.95 | 130 | 18 | 36 | 860 | 27000 | 31 |
| | | | 150 | 5 | 33 | 920 | 30000 | 33 |
| | | | 180 | 0.833 | 33 | 870 | 26000 | 30 |

*1: Molar ratio of ethylenediamine with respect to the entire carboxyl groups of PAA

EDA[2] : Ethylenediamine

*3: Unit ($cm^3/cm^2$•MPa•s)

Ex. 11: Paper/Film of the Invention/EVA (100 μm/2 μm/20 μm)

Ex. 12: PMP/Film of the Invention/EVA (20 μm/2 μm/20 μm)

*4: Amounts of elution after soaking for 1 hr at 80°C (weight%)

EP 0 796 885 A2

Example 13

The 10 weight% aqueous PAA solution employed in Example 1 was used. To 1,000 parts by weight of the aqueous PAA solution (solid content: 100 parts by weight) were added 83.3 parts by weight of ethylene diamine as an aliphatic amine, so as to cause the molar ratio of the amine to the entire carboxyl groups of PAA to be 1.0. Similar to Example 1, an aqueous solution containing a reaction mixture was obtained. The resultant aqueous solution was applied by way of coating onto an aluminum sheet having a thickness of 50 micrometers (manufactured by Sun Aluminum Industries) by use of a mayer bar, and moisture was evaporated with a drier, to thereby obtain a layered intermediate having an aluminum sheet substrate and a sheet-shaped product provided thereon, the sheet-shaped product (dry film without undergoing heat treatment) being formed from a reaction mixture of PAA and ethylene diamine and having a thickness of 5 micrometers. Subsequently, the resultant layered intermediate was brought into contact with a hot roll for heat treatment, to thereby obtain a layered product having an aluminum sheet substrate and a film having selective gas permeability of the present invention superposed thereon. The thickness in total of the resultant layered product was 55 micrometers. The temperature of the hot roll and the contact time were respectively taken as the heat treatment temperature and the heat treatment time. The conditions of heat treatment were as follows: 180°C x 600 seconds, 200°C x 30, 40, 60, 180, and 300 seconds, 210°C x 10, 15, 20, and 60 seconds, 220°C x 5, 10, 15, 20, and 60 seconds, 230°C x 5, 10, 15, and 60 seconds, and 250°C x 5, 10, 15, and 60 seconds. Thus, 23 different kinds of layered products in which a film having selective gas permeability of the present invention was superposed on an aluminum sheet substrate were obtained. These layered products represent Example 13.

Comparative Example 5

Through use of layered intermediates prepared in Example 13 having an aluminum sheet substrate and a sheet-shaped product (dry film without undergoing heat treatment) provided thereon, the sheet-shaped product being formed from a reaction mixture of PAA and ethylene diamine and having a thickness of 5 micrometers, the following 8 different specimens were obtained: (1) one specimen which was not subjected to heat treatment, and (2) seven specimens each of which was subjected to the following heat treatment: 180°C x 300 seconds, 200°C x 10 and 20 seconds, 210°C x 2 and 5 seconds, 220°C x 2 seconds, and 230°C x 2 seconds. As a result, eight different layered products, each having an aluminum sheet substrate and a film for comparison superposed thereon, were obtained (thickness in total of each specimen: 55 micrometers) (Comparative Example 5).

From each of the thus-obtained 31 different layered films of Example 13 and Comparative Example 5, specimens each having a size of 10 cm x 10 cm were cut, and their resistance to water was assessed. The specimens were soaked in 80°C hot water for 1 hour. (Since the film was exfoliated from the aluminum sheet substrate soon after the start of soaking, the aluminum sheet substrate was removed from the hot water.) Subsequently, the film was taken out of the hot water, dried at 105°C for 1 hour, the weight was measured, and the amount of elution (weight%) was computed. The results of assessment in terms of resistance to water are shown in Table 5.

Separately, from each of the 31 different layered products that had not undergone assessment of resistance to water was cut a specimen having a size of 1 cm x 4 cm, and the specimen was subjected to an FT-IR measurement. The coating surface of each sample was brought into contact with a transmission medium, i.e., a prism (KRS-5), and measurement was performed by a reflection method. The resolving power was 4 cm$^{-1}$. Based on the infrared absorption spectrum, there was computed the absorbance rate ratio of the absorbance of N-H stretching vibration attributed to $NH_3^+$, an amine salt having a maximum absorption wave number at 2,154 cm$^{-1}$, to that of C-H deformation vibration attributed to $CH_2$ having a maximum absorption wave number at 1,455 cm$^{-1}$ ($N^+$-H/CH). The absorbance ratios were shown in Table 5.

Table 5

| | Molar Ratio[*1] | Heat treament conditions | | Resistance to water[*2] (Weight%) | (N+-H/CH) Absorbance ratio |
|---|---|---|---|---|---|
| | | Temp. (°C) | Time (hrs) | | |
| Ex. 13 | 1.0 | 180 | 600 | 0 | 0.049 |
| | 1.0 | 200 | 30 | 28 | 0.098 |
| | 1.0 | 200 | 40 | 17 | 0.095 |
| | 1.0 | 200 | 60 | 10 | 0.077 |
| | 1.0 | 200 | 180 | 5 | 0.092 |
| | 1.0 | 200 | 300 | 7 | 0.066 |
| | 1.0 | 210 | 10 | 16 | 0.085 |
| | 1.0 | 210 | 15 | 5 | 0.078 |
| | 1.0 | 210 | 20 | 1 | 0.066 |
| | 1.0 | 210 | 60 | 0 | 0.051 |
| | 1.0 | 220 | 5 | 15 | 0.086 |
| | 1.0 | 220 | 10 | 10 | 0.082 |
| | 1.0 | 220 | 15 | 2 | 0.080 |
| | 1.0 | 220 | 20 | 0 | 0.063 |
| | 1.0 | 220 | 60 | 0 | 0.046 |
| | 1.0 | 230 | 5 | 15 | 0.074 |
| | 1.0 | 230 | 10 | 7 | 0.071 |
| | 1.0 | 230 | 15 | 0 | 0.079 |
| | 1.0 | 230 | 60 | 0 | 0.037 |
| | 1.0 | 250 | 5 | 0 | 0.087 |
| | 1.0 | 250 | 10 | 0 | 0.089 |
| | 1.0 | 250 | 15 | 0 | 0.060 |
| | 1.0 | 250 | 60 | 0 | 0.028 |
| Comp. Ex. 5 | 1.0 | - | - | 100 | 0.134 |
| | 1.0 | 180 | 300 | 57 | 0.112 |
| | 1.0 | 200 | 10 | 95 | 0.126 |
| | 1.0 | 200 | 20 | 84 | 0.111 |
| | 1.0 | 210 | 2 | 100 | 0.130 |
| | 1.0 | 210 | 5 | 98 | 0.126 |
| | 1.0 | 220 | 2 | 93 | 0.128 |
| | 1.0 | 230 | 2 | 80 | 0.125 |

*1: Molar ratio of amine with respect to the entire carboxyl groups of PAA

*2: Amounts of elution after soaking for 1 hr at 80°C (weight%)

Fig. 2 is a graph showing the relation of the heat treatment temperature and heat treatment time which achieve the amount of elution of less than 50 weight% based on the original weight after soaking in 80°C hot water for 1 hour, based on the heat treatments performed in Example 13 and Comparative Example 5, wherein X-axis represents the heat treatment temperature (T: °C) and Y-axis represents the heat treatment time (Y: second). From the plottings (solid dots) was obtained a regression curve shown in a solid line, which is expressed by the following equation:

$$Y = 8.0 \times 10^{34} T^{-14.5} \text{ (correlation coefficient: 0.8934).}$$

Thus, heat treatment conditions for obtaining the film of the present invention, i.e., the film having resistance to hot water, preferably satisfy the following expressions (c) and (d):

$$\text{(c)} \qquad Y \geqq 8.0 \times 10^{34} T^{-14.5}$$

$$\text{(d)} \qquad 100 \leqq T \leqq 300$$

wherein Y represents the time during which heat treatment is performed (seconds) and T represents the temperature at which heat treatment is performed (°C).

Examples 14 through 31 and Comparative Examples 6 and 8

The 10 weight% aqueous PAA solution employed in Example 1 was used. To 1,000 parts by weight of the solution (solid content: 100 parts by weight) were added 83.3 parts by weight of ethylene diamine so as to cause the molar ratio of ethylene diamine to the entire carboxyl groups of PAA to be 1.0. Similar to Example 1, an aqueous solution containing a reaction mixture was obtained. The resultant aqueous solution was applied onto duplicated paper having a thickness of 85 micrometers (manufactured by Daishowa Paper Manufacturing Co., Ltd.) by use of a mayer bar. As in Example 1, moisture was evaporated with a drier, to thereby obtain a layered intermediate having a duplicated paper substrate and a sheet-shaped product provided thereon, the sheet-shaped product being formed from a reaction mixture of PAR and ethylene diamine, and having a thickness of 5 micrometers. The thus-prepared layered intermediate was brought into contact with a hot roll for heat treatment, to thereby obtain a layered product having a duplicated paper substrate and a film having selective gas permeability of the present invention (thickness in total: 90 micrometers). The temperature and time of the heat treatments performed are as follows: 180°C x 300 seconds (Comparative Example 7), 200°C x 20 seconds (Comparative Example 8), 200°C x 40 seconds (Example 14), 200°C x 60 seconds (Example 15), 200°C x 120 seconds (Example 16), 200°C x 300 seconds (Example 17), 210°C x 10 seconds (Example 18), 210°C x 20 seconds (Example 19), 210°C x 60 seconds (Example 20), 220°C x 10 seconds (Example 21), 220°C x 20 seconds (Example 22), 220°C x 60 seconds (Example 23), 230°C x 5 seconds (Example 24), 230°C x 10 seconds (Example 25), 230°C x 15 seconds (Example 26), 230°C x 40 seconds (Example 27), 230°C x 60 seconds (Example 28), 230°C x 180 seconds (Example 29), 250°C x 5 seconds (Example 30), and 250°C x 10 seconds (Example 31). The specimen that had not undergone heat treatment was used as Comparative Example 6.

The carbon dioxide gas permeation rate and the oxygen gas permeation rate of each of these 21 layered products were measured, and the ratio between the two was calculated. Resistance to water of the film having selective gas permeability of the present invention was obtained in accordance with the method described in Example 13. Also, in the same manner as Example 13, ET-IR was measured, to thereby obtain the absorbance ratio ($N^+$-H/CH). The results are shown in Table 6. Although not shown in Table 6, NMR was performed for specimens representing Comparative Examples 6, 8, and Examples 14, 15, and 17, and as a result, neither shoulder or peak was observed in the vicinity of 180 ppm in Comparative Examples 6 and 8, whereas in Examples 14, 15, and 17, a shoulder or peak was observed at 180 ppm.

Table 6

| | Aliphatic diamine | Molar ratio[*1] | Heat treatment conditions | | Resistance to water[*4] | Gas permeation rates[*3] and ratio of permeation rates | | | $(N^+-H/CH)$ Absorbance ratio |
|---|---|---|---|---|---|---|---|---|---|
| | | | Temp. (°C) | Time (hrs) | (weight%) | Complex membrane including paper | | | |
| | | | | | | $O_2$ | $CO_2$ | $CO_2/O_2$ | |
| Comp. Ex. 6 | EDA[*2] | 1.0 | — | — | 100 | 1190 | 140000 | 118 | 0.134 |
| Comp. Ex. 7 | Ditto | 1.0 | 180 | 300 | 57 | 1460 | 105000 | 72 | 0.112 |
| Comp. Ex. 8 | Ditto | 1.0 | 200 | 20 | 84 | 1380 | 91000 | 66 | 0.111 |
| Ex. 14 | Ditto | 1.0 | 200 | 40 | 17 | 1260 | 77000 | 61 | 0.095 |
| Ex. 15 | Ditto | 1.0 | 200 | 60 | 10 | 1210 | 81000 | 67 | 0.077 |
| Ex. 16 | Ditto | 1.0 | 200 | 120 | 7 | 1260 | 57000 | 45 | 0.071 |
| Ex. 17 | Ditto | 1.0 | 200 | 300 | 7 | 1070 | 37000 | 35 | 0.066 |
| Ex. 18 | Ditto | 1.0 | 210 | 10 | 16 | 940 | 55000 | 59 | 0.085 |
| Ex. 19 | Ditto | 1.0 | 210 | 20 | 1 | 900 | 54000 | 60 | 0.066 |
| Ex. 20 | Ditto | 1.0 | 210 | 60 | 0 | 850 | 47000 | 55 | 0.051 |
| Ex. 21 | Ditto | 1.0 | 220 | 10 | 10 | 780 | 45000 | 57 | 0.082 |
| Ex. 22 | Ditto | 1.0 | 220 | 20 | 2 | 810 | 46000 | 57 | 0.063 |
| Ex. 23 | Ditto | 1.0 | 220 | 60 | 0 | 760 | 40000 | 53 | 0.046 |
| Ex. 24 | Ditto | 1.0 | 230 | 5 | 15 | 760 | 78000 | 103 | 0.074 |
| Ex. 25 | Ditto | 1.0 | 230 | 10 | 7 | 870 | 80000 | 92 | 0.071 |
| Ex. 26 | Ditto | 1.0 | 230 | 15 | 0 | 860 | 64000 | 74 | 0.079 |
| Ex. 27 | Ditto | 1.0 | 230 | 40 | 0 | 770 | 46000 | 60 | 0.061 |
| Ex. 28 | Ditto | 1.0 | 230 | 60 | 0 | 680 | 29000 | 43 | 0.037 |
| Ex. 29 | Ditto | 1.0 | 230 | 180 | 0 | 680 | 22000 | 32 | 0.024 |
| Ex. 30 | Ditto | 1.0 | 250 | 5 | 0 | 490 | 25000 | 51 | 0.088 |
| Ex. 31 | Ditto | 1.0 | 250 | 10 | 0 | 440 | 25000 | 57 | 0.072 |

*1: Molar ratio of ethylenediamine with respect to the entire carboxyl groups of PAA

EDA[*2] : Ethylenediamine

*3: Unit $(cm^3/cm^2 \bullet MPa \bullet s)$
*4: Amounts of elution after soaking for 1 hr at 80°C (weight%)

As described hereinabove, the film having selective gas permeability of the present invention has resistance to 80°C hot water, plus a high ratio of $CO_2$ gas permeation rate to oxygen gas permeation rate. Therefore, the film of the invention, either as a single film or in the form of a layered product including at least one film having selective gas permeability of the present invention and a substrate, is useful as a material for separating carbon dioxide gas from a mixed gas containing carbon dioxide gas particularly in an environment of high temperature and high humidity. Moreover, the film of the invention is useful as a packaging material for foods with a high water content, foods that are apt to generate carbon dioxide gas, foods that should be kept away from contact with oxygen, and packaged foods to be heated under high pressure and high humidity (e.g. foods packaged in a retort pouch). According to the present invention, films having selective gas permeability and suitable for the above uses are provided in an economical manner.

**Claims**

1. A molded product having selective gas permeability which comprises a reaction product obtainable by reacting a polyacrylic acid and an aliphatic diamine, the molar ratio of said diamine with respect to the entirety of the carboxyl groups in said polyacrylic acid being from 0.2:1 and 2.0:1; wherein:

   (a) the absorbance ratio of N-H stretching vibration attributed to an amine salt having a maximum absorption wave number of from 1,800 to 2,500 $cm^{-1}$ to C-H deformation vibration attributed to a methylene group having a maximum absorption wave number of from 1,430 to 1,480 $cm^{-1}$ ($N^+$-H/CH) is from 0.001:1 to 0.11:1; or
   (b) the amount of elution of the molded product upon being soaked in 80°C water for 1 hour is less than 50 weight% based on the original weight of the molded product.

2. A molded product according to claim 1 wherein the aliphatic diamine is an aliphatic primary diamine.

3. A molded product according to claim 1 or 2 wherein the ratio of carbon dioxide gas permeation rate to oxygen gas permeation rate ($CO_2$ gas permeation rate/$O_2$ gas permeation rate) is not less than 15:1, as measured at 23°C and a relative humidity of 80%.

4. A molded product according to any one of the preceding claims which is a film.

5. A layered structure comprising at least one layer of a molded product according to any one of the preceding claims and a substrate layer.

6. A structure according to claim 5, wherein the substrate layer comprises at least one layer of a material selected from thermoplastic resins, thermosetting resins, paper, woven fabrics and metallic porous materials.

7. A structure according to claim 5 or 6 which has at least one intermediate layer of a molded product according to any one of claims 1 to 5 and two substrate layers, the two substrate layers constituting the outermost layers.

8. A process for producing a molded product according to claim 1, which process comprises:

   (1) reacting a polyacrylic acid and an aliphatic diamine, the molar ratio of said diamine with respect to the entirety of the carboxyl groups in said polyacrylic acid being from 0.2:1 to 2.0:1.
   (2) molding the resultant reaction mixture, and
   (3) heat treating the resultant product at from 100 to 300°C.

9. A process according to claim 8 wherein the heat treatment is performed in a hot and dry atmosphere under the following conditions (a) and (b):

$$\text{(a)} \qquad Y \geqq 9.1 \times 10^{25} T^{-10.8}$$

$$\text{(b)} \qquad 100 \leqq T \leqq 300$$

wherein Y represents the time during which heat treatment is performed (minutes) and T represents the temperature at which heat treatment is performed (°C).

**10.** A process according to claim 8 wherein the heat treatment is performed by bringing the molded product into contact with a hot roll under the following conditions (c) and (d):

$$\text{(c)} \qquad Y \geqq 8.0 \times 10^{34} T^{-14.5}$$

$$\text{(d)} \qquad 100 \leqq T \leqq 300$$

wherein Y represents the time during which heat treatment is performed (seconds) and T represents the temperature at which heat treatment is performed (°C).

**11.** A process according to any one of claims 8 to 10 wherein the resultant reactant mixture is molded to a film.

Fig.1

heat treatment time (Y: min.)

$$Y = 9.1 \times 10^{25} T^{-10.8}$$

heat treatment temperature (T:°C)

Fig.2

$Y \geqq 8.0 \times 10^{34} T^{-14.5}$

heat treatment temperature (T: ℃)

heat treatment time (Y: sec.)